# EUROPEAN PATENT APPLICATION

(11) **EP 4 814 720 A1**
(43) Date of publication of application: **30.09.2026**
(21) Application number: 26163756.5
(22) Date of filing: 10.03.2026
(51) Int. Cl.: G06F 9/50, G06F 11/36

(54) **MULTI-LEVEL WORKLOAD FLIGHTING SERVICE**

(30) Priority: 28.03.2025 US 202519094329
(71) Applicant: Microsoft Technology Licensing, LLC, Redmond, WA 98052 (US)
(72) Inventor: BORDIA, Akshat, Redmond, Washington, 98052 (US); TARAFDAR, Arijit, Redmond, Washington, 98052 (US); LI, Xiaoqiao, Redmond, Washington, 98052 (US); KHUSHALANI, Sumeet, Redmond, Washington, 98052 (US); CHALIPARAMBIL, Kishore Raghavan, Redmond, Washington, 98052 (US)
(74) Representative: CMS Cameron McKenna Nabarro Olswang LLP

(57) **Abstract**

Systems, methods, and computer program products are disclosed for a multi-level workload flighting service. A received customer job request for a customer job is copied to create a shadow job request for a shadow job. The customer job request is provided to a first service having a first configuration, and the shadow job request is provided to a flighting service. The flighting service determines that the shadow job request satisfies a flighting criteria and provides the shadow job to a second service having a second configuration. Execution data resulting from execution of the customer job and the shadow job are collected for analysis.

## Description

### BACKGROUND

Workload flighting involves testing of a new system by executing customer workloads on the system before its full deployment. This approach helps identify bugs, gather customer feedback, and measure performance impacts of the new system in a controlled manner. By analyzing flighting results, developers can make necessary adjustments before full migration of customers to the new system, thereby reducing the risk of widespread issues.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Systems, methods, and computer program products are disclosed for a multi-level workload flighting service. Workload are selectively executed on a new system configuration in order to identify bugs and measure performance prior to the migration of customer workloads to the system.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRA WINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows a block diagram of an example system for employing shadow job requests to selectively flight customer workloads, in accordance with an embodiment.
FIG. 2 shows a block diagram of an example system for creating and employing flighting sessions to selectively flight customer workloads, in accordance with an embodiment.
FIG. 3 shows a flowchart of an example process for employing shadow job requests to selectively flight customer workloads, in accordance with an embodiment.
FIG. 4 shows a flowchart of an example process for validating flighting results, in accordance with an embodiment.
FIG. 5 shows a flowchart of an example process for filtering shadow jobs based on a normalized job name, in accordance with an embodiment.
FIG. 6 depicts a flowchart of an example process for employing flighting session parameters to customize shadow jobs, in accordance with an embodiment.
FIG. 7 shows a flowchart of an example process for determining flighting session precedence based on flighting level, in accordance with an embodiment.
FIG. 8 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments

Flighting is a controlled rollout strategy used to gradually release new features, updates, or changes. It allows developers to test functionality, gather feedback, and monitor performance in real-world conditions while minimizing risk. Flighting typically involves gradually rolling out new features, updates, or changes to subsets of users or customers at a time. By progressively expanding the rollout based on stability and customer response, flighting helps detect and resolve issues early, ensuring a smoother experience for all users. Flighting is commonly used in cloud services to deploy new services and/or features to cloud customers (e.g., tenants).

In order to test a new system under real world conditions, flighting typically involves running actual customer workloads on the new system. The new system includes a software and/or hardware system that is deployed in one or more servers to execute customer workloads. A workload is a specific set of tasks, processes, or computational operations executed by the system. It is common to perform workload flighting by migrating a subset of customers to the new system in order to minimize the effect of any issues with the new system. If issues arise, only a subset of customer workloads are affected. If no issues arise, additional customers are migrated to the new system to provide additional flighting results.

The migration of customers to the new system, however, may cause a degradation to customer workloads due to unknown bugs and/or performance issues in the system. Given the risks involved, recruiting customers to volunteer for workload flighting could be difficult. Additionally, migrating a customer to a new system for workload flighting typically requires the migration of all of the workloads associated with the customer. This approach leads to inefficient workload flighting because all workloads (including untested workloads) associated with the customer are executed on the new system even when certain customer workloads have been thoroughly tested on the new system. Another shortcoming of current flighting approaches is the granting of persistent superuser access to customer data that is provided to flighting systems. This approach results in overprivileged access to customer data, thereby increasing the risk of a data breach.

The improved technology described herein includes a multi-level workload flighting service. In the multi-level workload flighting service, incoming customer jobs are copied to generate shadow jobs. The original customer jobs are provided to a service running in the customer cloud for execution using a current configuration, while the shadow jobs are provided to a flighting service for selective testing on a new configuration. The performance of the new configuration is determined by comparing the execution results and/or performance of the original customer job and the shadow job. Because the shadow jobs are tested separately from the original customer jobs, they enable testing of new configurations in real-world scenarios based on actual customer workloads without affecting the results of the original customer job. For instance, shadow jobs can run on a service vastly different from an existing service, such as, but not limited to, a service that is based on a different architecture, different platform, and/or different runtime version than an existing service. This approach reduces the risk involved in flighting customer workloads on new configurations and encourages customers to opt into workload flighting. Additionally, the shadow job inherits authentication tokens associated with the original customer job, thereby granting the shadow job the same access to customer data allowed to the original customer job. This approach reduces the risks of overprivileged access associated with granting a flighting system superuser access to customer data.

Embodiments of the multi-level flighting service efficiently select shadow jobs for flighting in various ways, such as based on the type of job, and submits the selected shadow jobs to a service running outside of the customer cloud for execution using a new configuration. The flighting service selects shadow jobs using flighting sessions that specify job selection criteria, a flighting scope indicating the level at which to flight the job, and flighting job parameters that specify parameters to apply to the shadow job during flighting. The flighting service selects shadow jobs for flighting that match the job selection criteria of active flighting sessions. Examples of job selection criteria include, but are not limited to, a normalized job identifier, an account identifier, a criticality tier identifier, a job submission timestamp range, a token range, a flighting quota indicating the number of job instances to flight, and/or the like.

Once selected for flighting, the shadow job is provided to a service running outside of the customer cloud for execution using a new configuration. The shadow job includes tokens associated with the original customer job to enable the shadow job to access customer data in a read-only fashion. This approach enables the shadow job to operate on the same customer data in a manner similar to the original customer job to enable comparison of the execution results of the original customer job and the shadow job. In embodiments, the output data are compared by comparing hashes of the output data. This ensures that the new configuration produces the correct results.

Workload flighting is, in embodiments, performed at various flighting scopes (i.e., levels) that provide different levels of detail and/or different metrics on the performance of the shadow job. For example, shadow jobs flighted at a higher level flighting scope will result in the collection of less detailed data compared to lower level flighting scopes. Shadow jobs that perform poorly at the high-level flighting scope can be flagged for additional flighting at a lower level flighting scope to collect additional debugging data. This approach enables efficient flighting of shadow jobs by identifying trouble shadow jobs that cause issues under the new configuration at a higher flighting scope, and drilling down to identify the root cause of the issue by flighting the trouble shadow jobs at a lower level flighting scope.

These and further embodiments enable the functionality described above and additional functionality. Such embodiments are described in further detail as follows.

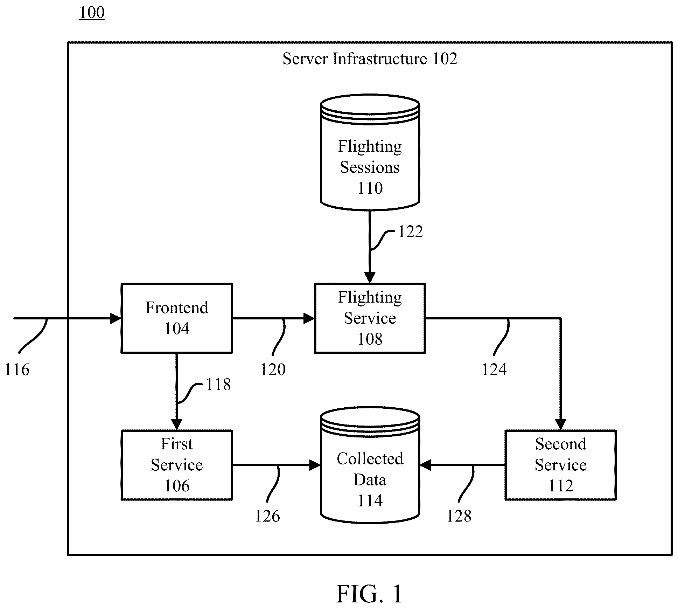

For example, FIG. 1 shows a block diagram of an example system 100 for employing shadow job requests to selectively flight customer workloads, in accordance to an embodiment. As shown in FIG. 1, system 100 includes a server infrastructure 102 that comprises a frontend 104, a first service 106, a flighting service 108, flighting sessions 110, a second service 112, and collected data 114. System 100 is described in further detail as follows.

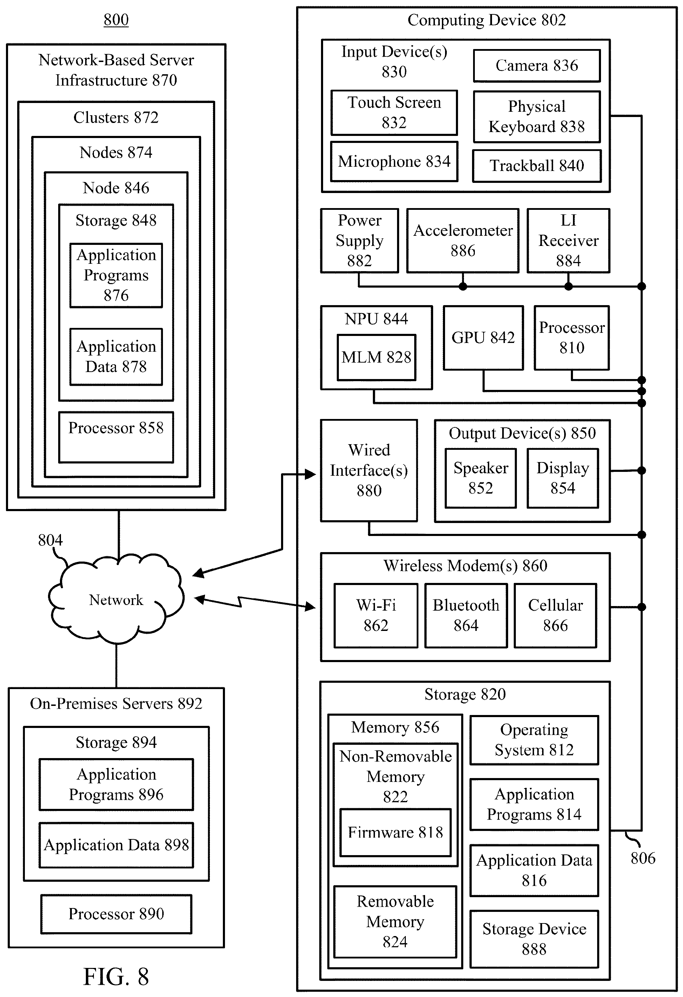

Server infrastructure 102 comprises a network-accessible server set (e.g., cloud-based environment or platform). In an embodiment, the underlying resources of server infrastructure 102 are co-located (e.g., housed in one or more nearby buildings with associated components such as backup power supplies, redundant data communications, environmental controls, etc.) to form a datacenter, are distributed across different regions, and/or are arranged in other manners. Various example implementations of server infrastructure 102 are described below in reference to FIG. 8 (e.g., network-based server infrastructure 870, on-premises server 892, and/or components thereof).

Frontend 104 is configured to receive and process customer workloads, such as, a customer job request 116 for a customer job 118. In embodiments, frontend 104 determines whether the customer associated with customer job request 116 has consented (i.e., opted in) to flighting of the customer job 118. For example, frontend 104 determines whether a customer identifier, an account identifier, and/or a normalized job identifier associated with customer job request 116 is associated with a flighting consent of the customer. If the customer has consented to flighting of customer job 118, frontend 104 creates a copy of customer job request 116 as a shadow job request 120 for a shadow job 124. In instances, frontend 104 creates a copy of customer job request 116 by copying metadata of customer job request 116, an authentication token of customer job request 116, and/or customer job 118 to create shadow job request 120. In embodiments, frontend 104 provides customer job 118 to a first service 106, and provides shadow job request 120 to flighting service 108. In a configuration, frontend 104 configures customer job 118 using job parameters associated with a customer identifier, an account identifier and/or a job identifier of the customer in order to modify the execution customer job 118 based on the parameters.

First service 106 is configured to execute customer workloads by performing computing tasks based on customer data to generate first execution data 126 that comprise, for example, but not limited to, execution results, performance metrics, errors, and/or the like. In embodiments, first service 106 includes various types of services, such as, but not limited to, software-as-a-service (SaaS), infrastructure-as-a-service (IaaS), platform-as-a-service (PaaS), database-as-a-service (DBaaS), artificial-intelligence-as-a-service (AIaaS), container-as-a-service (CaaS), and/or the like. In configurations, first service 106 has a first configuration, such as, but not limited to, a first architecture, a first runtime version, and/or a first platform version. In instances, first service 106 operates in a customer cloud space of the customer and resources consumed by first service 106 are billed to the customer.

Flighting service 108 is configured to selectively flight shadow job requests 120 based on active flighting sessions 110. In embodiments, flighting service 108 receives shadow job request 120 and determines whether or not shadow job request satisfies the flighting criteria of flighting sessions 110. For example, flighting service 108 determines whether shadow job request 120 satisfies flighting criteria, such as, but not limited to, a normalized job name criterion where a normalized job name of shadow job request 120 matches a normalized job name specified by flighting sessions 110, a tier criterion where a tier of shadow job request 120 matches a tier specified by flighting sessions 110, a job token allocation criterion where a job token of shadow job request 120 is within a job token allocation range specified by flighting sessions 110, a job submission time criterion where a submission time of shadow job request 120 is within a job submission time range specified by flighting sessions 110, an account identifier criterion where an account identifier of shadow job request 120 matches an account identifier specified by flighting sessions 110, a criticality tier criterion where a criticality tier of an account associated with shadow job request 120 is equal to and/or within a criticality tier and/or criticality tier range specified by flighting sessions 110, and/or a job flighting limit criterion where the number of times a unique shadow job has been flighted is less than a job flighting limit specified by flighting sessions 110. In instances, flighting service 108 accesses matching flighting sessions 122 from flighting sessions 110.

Workload flighting is, in embodiments, performed at various flighting scopes that provide different levels of detail and/or different metrics on the performance of the shadow job. For instance, a high-level flighting scope can include flighting jobs at a tier level, where jobs associated with all customer accounts belonging to a criticality tier are flighted at a low granularity. In configurations, workload flighting can be performed in stages based on the criticality tiers, where jobs belonging to a less critical accounts at a lower criticality tier are flighted before jobs belonging to more critical accounts at a higher criticality tier. For instance, customer accounts (e.g., services) that require high availability and/or high accuracy are assigned into a higher criticality tier, while customer services that are less critical are assigned to a lower criticality tier. In embodiments, a mid-level flighting scope can include flighting jobs at an account level, where jobs associated with an identified customer account are flighted at a higher granularity compared to the high-level flighting scope, and a low-level flighting scope can include flighting jobs at a job level, where identified jobs are flighted at a higher granularity compared to the mid-level flighting scope.

In embodiments, the flighting scope affects the amount and/or the type (e.g., types of metrics) of data collected during flighting. For example, shadow jobs flighted at the high-level flighting scope will result in the collection of less detailed data compared to other flighting scopes. In instances, accounts that perform poorly and/or incorrectly at the high-level flighting scope can be flagged for further flighting using a mid-level flighting scope to collect additional account-level data at a higher granularity compared to the high-level flighting scope. Similarly, jobs that perform poorly and/or incorrectly can be flagged for further flighting using a low-level flighting scope to collect additional job-level data at a higher granularity compared to the mid-level flighting scope. This approach enables efficient flighting of shadow jobs by identifying trouble accounts and/or trouble shadow jobs that cause issues under the new configuration at a high-level flighting scope, and drilling down to identify the root cause of the issue by flighting the trouble accounts and/or trouble shadow jobs at a lower flighting scope.

When shadow job request 120 matches a plurality of active flighting sessions 110, flighting service 108 determines, in embodiments, a precedence order of the matching flighting sessions 122. For instance, flighting service 108 determines the flighting scopes (e.g., tier-level, account-level, job-level, etc.) of matching flighting sessions 122, and determines the precedence order based on the determined flighting scopes. In configurations, matching flighting sessions 122 having a low-level (e.g., job-level) flighting scope has a higher precedence than matching flighting sessions 122 having a mid-level (e.g., account-level) flighting scope or a high-level (e.g., tier-level) flighting scope, and matching flighting sessions 122 having a mid-level (e.g., account-level) flighting scope has a higher precedence than matching flighting sessions 122 having a high-level (e.g., tier-level) flighting scope. In embodiments, controls exist to ensure that a job can only match a single active flighting session at each level of the hierarchy.

In embodiments, flighting service 108 configures shadow job 124 based on matching flighting session 122, or the matching flighting session 122 that has the highest precedence if shadow job request 120 matches a plurality of flighting sessions 110, to generate a configured shadow job 124, and provides configured shadow job 124 to second service 112. For instance, flighting service 108 accesses a flighting scope (e.g., tier-level, account-level, job-level, etc.), a flighting account identifier, a flighting runtime version, and/or flighting parameters specified in the matching flighting session 122, or the matching flighting session 122 that has the highest precedence if shadow job request 120 matches a plurality of flighting sessions 110, with the highest precedence, and configures shadow job 124 based on the flighting account identifier, the flighting runtime version, and/or the flighting parameters. In instances, flighting service 108 selects second service 112 based on the flighting account identifier and/or flighting runtime version, and submits configured shadow job 124 to second service 112.

Flighting sessions 110 enable selective flighting of customer jobs requests 116 and/or flighting of customer jobs requests 116 at various flighting scopes. In embodiments, flighting sessions 110 specify flighting criteria, such as, but not limited to, a normalized job name criterion that specifies a normalized job name for jobs eligible for job-level flighting, a tier criterion that specifies a tier for jobs eligible for tier-level flighting, a job token allocation criterion that specifies a job token range eligible for flighting, a job submission time criterion that specifies a submission time range eligible for flighting, an account identifier criterion that specifies an account identifier eligible for account-level flighting, a criticality tier criterion that specifies a criticality tier or a criticality tier range eligible for tier-level flighting, and/or a job flighting limit criterion that specifies the number of times a unique shadow job should be flighted. In instances, flighting sessions 110 include other information, such as, but are not limited to, a unique flighting session identifier, a flighting account identifier that identifies a flighting account to be used for flighting jobs matching the flighting session, a flighting runtime version that specifies a runtime version to be used for flighting jobs matching the flighting session, and/or flighting parameters to be used for flighting jobs matching the flighting session.

Second service 112 is configured to execute shadow job 124 by performing computing tasks based on the same customer data as customer job 118 to generate second execution data 128 that comprise, for example, but not limited to, execution results, performance metrics, and/or the like. In embodiments, second service 112 accesses the same customer data as customer job 118 in a read-only manner using an authentication token associated with customer job request 116 and copied to shadow job request 120. In instances, data collected during execution of shadow job 124 are stored outside of a customer space, for example, but not limited to, in storage associated with a flighting account, and/or in collected data 114. In configurations, second service 112 has a second configuration that is different than the first configuration of first service 106, such as, but not limited to, a second architecture that is different than the first architecture of first service 106, a second runtime version that is different than the first runtime version of first service 106, and/or a second platform version that is different than the first platform version of first service 106. In instances, second service 112 operates in a flighting account outside of the customer cloud space of the customer and resources consumed by second service 112 are not billed to the customer. In an embodiment, second service 112 is a multi-tenant service that executes shadow job 124 that are associated with a plurality of customers (i.e., tenants) in an isolated manner where shadow job 124 associated with a first customer cannot access data associated with a second customer.

In embodiments, flighting service 108 collects data during the execution of customer job 118 and shadow job 124 to enable comparison of their respective execution and/or performances. For example, first execution data 126 is collected during execution of customer job 118 and second execution data 128 is collected during execution of shadow job 124. In instances, the collected data is stored in collected data 114.

Collected data 114 is configured to store data resulting from execution of customer job 118 and/or shadow job 124 by first service 106 and/or second service 112, respectively. In embodiments, collected data 114 includes, but is not limited to, execution results, debugging information, and/or metrics generated and/or collected during execution of customer job 118 and/or shadow job 124 by first service 106 and/or second service 112, respectively. In instances, debugging information include, but is not limited to, errors generated during execution of customer job 118 and/or shadow job 124 by first service 106 and/or second service 112, respectively. In configurations, metrics include, but are not limited to, execution time, lag, data throughput, resource (e.g., CPU, GPU, memory, storage, network, etc.) consumption, energy consumption, and/or the like.

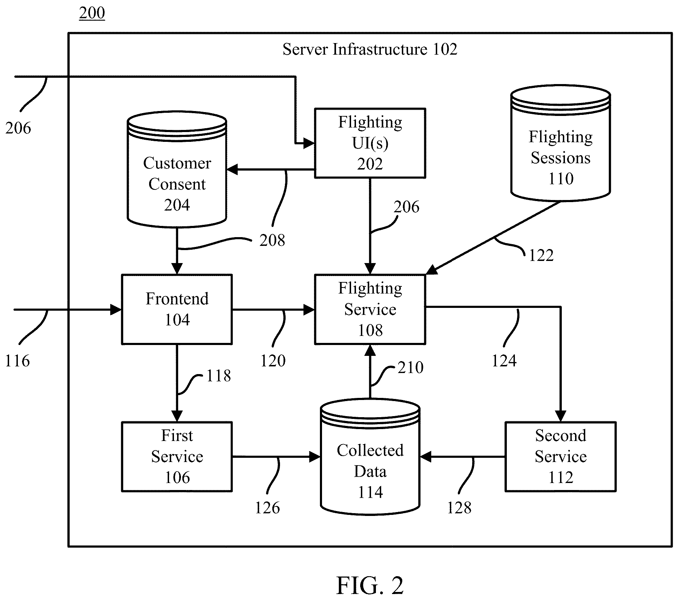

Embodiments described herein may operate in various ways to create and employ flighting sessions to selectively flight customer workloads. For instance, FIG. 2 shows a block diagram of an example system 200 for creating and employing flighting sessions to selectively flight customer workloads, in accordance with an embodiment. As shown in FIG. 2, system 200 includes server infrastructure 102, frontend 104, first service 106, flighting service 108, flighting sessions 110, second service 112, and collected data 114. In system 200, server infrastructure 102 further includes one or more flighting user interfaces (UI) 202, and customer consent 204. System 200 is described in further detail as follows.

Flighting UI(s) 202 enables a user (e.g., customer, developer, administrator, etc.) to interact with flighting service 108 via interactions 206. For instance, flighting UI(s) 202 enables a user to consent (e.g., opt in) to workload flighting of customer jobs associated with a criticality tier, an account, and/or a job identifier of the customer. In configurations, flighting UI(s) 202 stores consent 208 in customer consent 204. In embodiments, flighting UI(s) 202 enables a user (e.g., customer, developer, administrator, etc.) to create, modify, and/or delete flighting sessions 110. For example, flighting UI(s) 202 provides an interface for the user to input and/or modify parameters associated with flighting sessions 110, to activate flighting sessions 110, and/or deactivate flighting sessions 110. In instances, flighting UI(s) 202 enables a user (e.g., customer, developer, administrator, etc.) to analyze collected data 114 collected during execution of customer job 118 and/or shadow job 124.

Customer consent 204 is configured to store customer consent to enable frontend 104 and/or flighting service 108 to determine whether a customer has opted into flighting of one or more customer workloads on second service 114. In embodiments, customers provide various levels of consent 208 through flighting UI(s) 202. For instance, a customer consent includes the flighting of one or more tiers, accounts, and/or jobs associated with the customer.

Furthermore, as depicted in FIG. 2, flighting service 108, in embodiments, accesses collected data 210 from collected data 114, and validates second service 112 by analyzing collected data 210. In embodiments, flighting 108 performs functional validation of second service 112 by analyzing errors generated during execution of shadow job 124 to determine whether shadow job 124 executed successfully. In instances, flighting service 108 performs data validation of second service 112 by comparing hashes of output data of customer job 118 by first service 106 and output data of shadow job 124 by second service 112. In configurations, flighting service 108 validates the performance of second service 112 by analyzing performance metrics collected during the execution of customer job 118 by first service 106 and/or during the execution of shadow job 124 by second service 112.

Moreover, as depicted in FIG. 2, frontend 104, in embodiments, accesses consent 208 from customer consent 204 to determine whether a customer job request 116 should be included in flighting. For instance, frontend 104 creates a shadow job request 120 based on customer job request 116 when consent 208 indicates that the customer associated with customer job request 116 has consented to the flighting of customer job request 116.

Based on the validation results of second service 112, flighting service 108, in embodiments, creates a new flighting session 110 to perform additional workload flighting on customer workloads (e.g., to perform tier-level flighting of additional and/or more critical tiers, to perform account-level flighting of trouble accounts, to perform job-level flighting of trouble jobs, etc.) in order to collect additional flighting data. Upon successful validation of second service 112, flighting service 108, in instances, migrates one or more customer workloads (e.g., at a tier-level, at an account-level, and/or at a job-level) from first service 106 to second service 112.

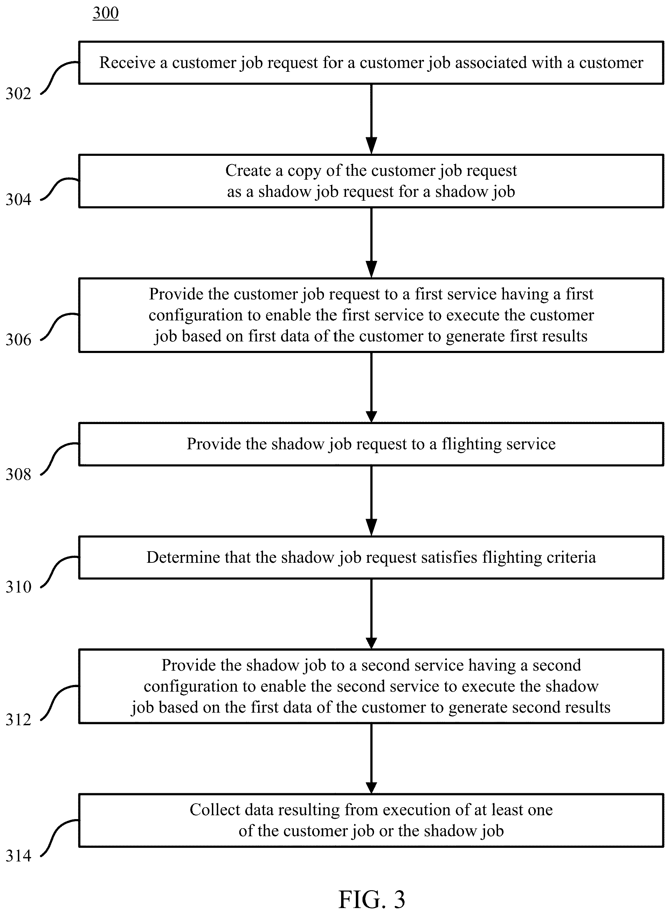

Embodiments described herein may operate in various ways to employ shadow job requests to selectively flight customer workloads. For instance, FIG. 3 depicts a flowchart 300 of a process for employing shadow job requests to selectively flight customer workloads, in accordance with an embodiment. In embodiments, server infrastructure 102, frontend 104, first service 106, flighting service 108, flighting sessions 110, second service 112, and/or collected data 114 may, for example, operate according to flowchart 300. Note that not all steps of flowchart 300 may need to be performed in all embodiments, and in some embodiments, the steps of flowchart 300 may be performed in different orders than shown. Flowchart 300 is described as follows with respect to FIGS. 1 and 2 for illustrative purposes.

Flowchart 300 starts at step 302. In step 302, a customer job request is received for a customer job associated with a customer. For instance, frontend 104 receives customer job request 116 for a customer job 118, and determines whether the customer has consented (e.g., opted in) to workload flighting.

In step 304, a copy of the customer job request is created as a shadow job request for a shadow job. For instance, if frontend 104 determines that the customer has consented to workload flighting, frontend 104 copies customer job request 116 to create shadow job request 120.

In step 306, the customer job is provided to a first service having a first configuration to enable the first service to execute the customer job based on first data of the customer to generate first results. For instance, frontend 104 provides customer job 118 to first service 106 to enable first service 106 to execute customer job 118 against customer data to generate first execution data 126. In embodiments, first service 106 has a first configuration, such as, but not limited to, a first architecture, a first runtime version, and/or a first platform version.

In step 308, the shadow job request is provided to a flighting service. For instance, frontend 104 provides shadow job request 120 to flighting service 108.

In step 310, the shadow job request is determined to satisfy flighting criteria. For instance, flighting service 108 determines that shadow job request 120 satisfies flighting criteria of matching flighting session 122 of active flighting sessions 110. For example, flighting service 108 determines whether shadow job request 120 satisfies flighting criteria, such as, but not limited to, a normalized job name criterion where a normalized job name of shadow job request 120 matches a normalized job name specified by flighting sessions 110, a tier criterion where a tier identifier of shadow job request 120 satisfies of tier specified by flighting sessions 110, a job token allocation criterion where a job token of shadow job request 120 is within a job token allocation range specified by flighting sessions 110, a job submission time criterion where a submission time of shadow job request 120 is within a job submission time range specified by flighting sessions 110, an account identifier criterion where an account identifier of shadow job request 120 matches an account identifier specified by flighting sessions 110, a criticality tier criterion where a criticality tier of an account associated with shadow job request 120 is equal to and/or within a criticality tier and/or criticality tier range specified by flighting sessions 110, and/or a job flighting limit criterion where the number of times a unique shadow job has been flighted is less than a job flighting limit specified by flighting sessions 110.

In step 312, the shadow job is provided to a second service having a second configuration to enable the second service to execute the shadow job based on the first data of the customer to generate second results. For instance, flighting service 108 provides configured shadow job 124 to second service 112. In instances, second service 112 executes shadow job 124 based on the same customer data as customer job 118 to generate second execution data 128.

In step 314, data resulting from execution of at least one of the customer job or the shadow job are collected. For instance, first execution data 126 and second execution data 128 are collected and stored in collected data 114. In embodiments, collected data 114 includes, but is not limited to, execution results, debugging information, and/or metrics generated and/or collected during execution of customer job 118 and/or shadow job 124 by first service 106 and/or second service 112, respectively.

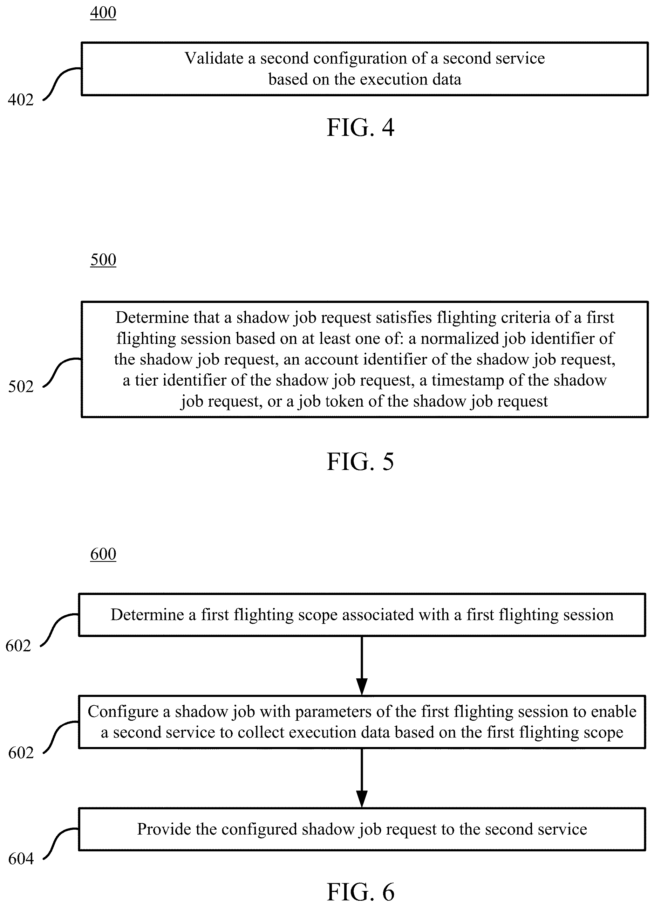

Embodiments described herein may operate in various ways to validate flighting results. For instance, FIG. 4 depicts a flowchart 400 of a process for validating flighting results, in accordance with an embodiment. In embodiments, server infrastructure 102, first service 106, flighting service 108, second service 112, and/or collected data 114 may, for example, operate according to flowchart 400. Flowchart 400 is described as follows with respect to FIGS. 1 and 2 for illustrative purposes.

Flowchart 400 starts at step 402. In step 402, a second configuration of a second service is validated based on the collected data. For instance, flighting service 108 accesses collected data 210 comprising first execution data 126 and second execution data 128 from collected data 114 and compares first execution data 126 and second execution data 128 to validate the configuration of second service 112. In embodiments, flighting 108 performs functional validation of second service 112 by analyzing errors generated during execution of shadow job 124 to determine whether shadow job 124 executed successfully. In instances, flighting service 108 performs data validation of second service 112 by comparing hashes of the output data of customer job 118 by first service 106 and output data of shadow job 124 by second service 112. In configurations, flighting service 108 validates the performance of second service 112 by analyzing performance metrics collected during the execution of customer job 118 by first service 106 and/or during the execution of shadow job 124 by second service 112.

Based on the validation results of second service 112, flighting service 108, in embodiments, creates a new flighting session 110 to perform additional workload flighting on customer workloads (e.g., to perform tier-level flighting of additional and/or more critical tiers, to perform account-level flighting of trouble accounts, to perform job-level flighting of trouble jobs, etc.) in order to collect additional flighting data. Upon successful validation of second service 112, flighting service 108, in instances, migrates one or more customer workloads (e.g., at a tier-level, at an account-level, and/or at a job-level) from first service 106 to second service 112.

Embodiments described herein may operate in various ways to filter shadow jobs based on a normalized job name. For instance, FIG. 5 depicts a flowchart 500 of a process filtering shadow jobs based on a normalized job name, in accordance with an embodiment. In embodiments, server infrastructure 102, flighting service 108, and/or flighting sessions 110 may, for example, operate according to flowchart 500. Flowchart 500 is described as follows with respect to FIGS. 1 and 2 for illustrative purposes.

Flowchart 500 starts at step 502. In step 502, a shadow job is determined to satisfy a criteria of a first flighting session based on at least one of: a normalized job identifier of the shadow job request, an account identifier of the shadow job request, a tier identifier of the shadow job request, a timestamp of the shadow job request, or a job token of the shadow job request. For instance, flighting service 108 determines whether shadow job request 120 satisfies flighting criteria, such as, but not limited to, a normalized job name criterion where a normalized job name of shadow job request 120 matches a normalized job name specified by flighting sessions 110, a tier criterion where a tier of shadow job request 120 matches a tier specified by flighting sessions 110, a job token allocation criterion where a job token of shadow job request 120 is within a job token allocation range specified by flighting sessions 110, a job submission time criterion where a submission time of shadow job request 120 is within a job submission time range specified by flighting sessions 110, an account identifier criterion where an account identifier of shadow job request 120 matches an account identifier specified by flighting sessions 110, and/or a job flighting limit criterion where the number of times a unique shadow job has been flighted is less than a job flighting limit specified by flighting sessions 110.

Embodiments described herein may operate in various ways to employ flighting session parameters to customize shadow jobs. For instance, FIG. 6 depicts a flowchart 600 of a process for employing flighting session parameters to customize shadow jobs, in accordance with an embodiment. In embodiments, server infrastructure 102, flighting service 108, and/or flighting sessions 110 may, for example, operate according to flowchart 600. Flowchart 600 is described as follows with respect to FIGS. 1 and 2 for illustrative purposes.

Flowchart 600 starts at step 602. In step 602, a first flighting scope associated with a first flighting session is determined. For instance, flighting service 108 determines a flighting scope specified by matching flighting session 122.

In step 604, a shadow job is configured with parameters of a first flighting session to enable a second service to collect execution data based on the first flighting scope. For instance, flighting service 108 configures shadow job 124 based on flighting parameters in matched flighting session 122. For instance, flighting service 108 accesses a flighting scope, a flighting account identifier, a flighting runtime version, and/or flighting parameters specified in the matching flighting session 122, or the matching flighting session 122 that has the highest precedence if shadow job request 120 matches a plurality of flighting sessions 110, with the highest precedence, and configures shadow job 124 based on the flighting scope, the flighting account identifier, the flighting runtime version, and/or the flighting parameters to generate configured shadow job 124 to enable second service 112 to collect execution data based on the flighting scope. In instances, flighting service 108 selects second service 112 based on the flighting account identifier and/or flighting runtime version.

In step 606, the configured shadow job is provided to a second service. For instance, flighting service 108 provides configured shadow job 124 to second service 112 for execution.

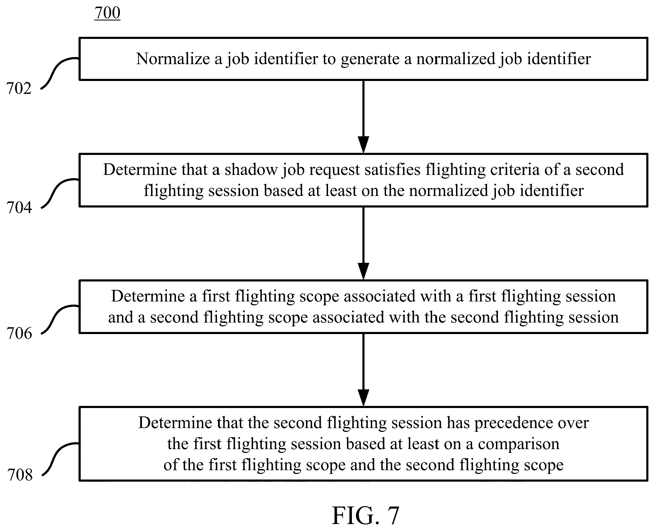

Embodiments described herein may operate in various ways to determine flighting session precedence based on flighting scope. For instance, FIG. 7 depicts a flowchart 700 of a process for determining flighting session precedence based on flighting scope, in accordance with an embodiment. In embodiments, server infrastructure 102, flighting service 108, and/or flighting sessions 110 may, for example, operate according to flowchart 700. Flowchart 700 is described as follows with respect to FIGS. 1 and 2 for illustrative purposes.

Flowchart 700 starts at step 702. In step 702, a job identifier is normalized to generate a normalized job identifier. For instance, flighting service 108 determines a job identifier associated with shadow job request 120 and normalizes the job identifier by removing instance-specific metadata (e.g., temporal information, globally-unique identifier, version, etc.) from the job identifier to generate a normalized base job identifier that matches instances of the job.

In step 704, a shadow job request is determined to satisfy flighting criteria of a second flighting session based on a normalized job identifier. For instance, flighting service 108 determines that shadow job request 120 satisfies flighting criteria of matching flighting sessions 122.

In step 706, a first flighting scope associated with a first fighting session and a second flighting scope associated with the second flighting session are determined. For instance, flighting service 108 determines the flighting scopes of matching flighting sessions 122.

In step 708, the second flighting session is determined as having precedence over the first flighting session based at least on a comparison of the first flighting scope and the second flighting scope. For instance, flighting service compares the flighting scopes of the matching flighting sessions 122 to determine the matching flighting session 122 that has the highest precedence. In embodiments, flighting sessions with a low-level flighting scope (e.g., job-level flighting) has a higher precedence than mid-level flighting scopes (i.e., account-level flighting) and high-level flighting scopes (i.e., criticality tier-level flighting), and flighting sessions with a mid-level flighting scope (i.e., account-level flighting) have a higher precedence than high-level flighting scopes (i.e., criticality tier-level flighting).

### III. Example Mobile Device and Computer System Implementation

Server infrastructure 102, frontend 104, first service 106, flighting service 108, flighting sessions 110, second service 112, and collected data 114, flighting UI(s) 202, customer consent 204, and/or the components described therein, and/or the steps of flowcharts 300, 400, 500, 600, and/or 700 are implemented in hardware, or hardware combined with one or both of software and/or firmware. For example, server infrastructure 102, frontend 104, first service 106, flighting service 108, flighting sessions 110, second service 112, and collected data 114, flighting UI(s) 202, customer consent 204, and/or the components described therein, and/or the steps of flowcharts 300, 400, 500, 600, and/or 700 are each implemented as computer program code/instructions configured to be executed in one or more processors and stored in a computer readable storage medium. Alternatively, server infrastructure 102, frontend 104, first service 106, flighting service 108, flighting sessions 110, second service 112, and collected data 114, flighting UI(s) 202, customer consent 204, and/or the components described therein, and/or the steps of flowcharts 300, 400, 500, 600, and/or 700 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 8. FIG. 8 shows a block diagram of an exemplary computing environment 800 that includes a computing device 802. Computing device 802 is an example of server infrastructure 102, which each include one or more of the components of computing device 802. In some embodiments, computing device 802 is communicatively coupled with devices (not shown in FIG. 8) external to computing environment 800 via network 804. Network 804 comprises one or more networks such as local area networks (LANs), wide area networks (WANs), enterprise networks, the Internet, etc. In examples, network 804 includes one or more wired and/or wireless portions. In some examples, network 804 additionally or alternatively includes a cellular network for cellular communications. Computing device 802 is described in detail as follows.

Computing device 802 can be any of a variety of types of computing devices. Examples of computing device 802 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 802 is a stationary computing device such as a desktop computer, a personal computer (PC), a stationary server device, a minicomputer, a mainframe, a supercomputer, etc.

As shown in FIG. 8, computing device 802 includes a variety of hardware and software components, including a processor 810, a storage 820, a graphics processing unit (GPU) 842, a neural processing unit (NPU) 844, one or more input devices 830, one or more output devices 850, one or more wireless modems 860, one or more wired interfaces 880, a power supply 882, a location information (LI) receiver 884, and an accelerometer 886. Storage 820 includes memory 856, which includes non-removable memory 822 and removable memory 824, and a storage device 888. Storage 820 also stores an operating system 812, application programs 814, and application data 816. Wireless modem(s) 860 include a Wi-Fi modem 862, a Bluetooth modem 864, and a cellular modem 866. Output device(s) 850 includes a speaker 852 and a display 854. Input device(s) 830 includes a touch screen 832, a microphone 834, a camera 836, a physical keyboard 838, and a trackball 840. Not all components of computing device 802 shown in FIG. 8 are present in all embodiments, additional components not shown may be present, and in a particular embodiment any combination of the components are present. In examples, components of computing device 802 are mounted to a circuit card (e.g., a motherboard) of computing device 802, integrated in a housing of computing device 802, or otherwise included in computing device 802. The components of computing device 802 are described as follows.

In embodiments, a single processor 810 (e.g., central processing unit (CPU), microcontroller, a microprocessor, signal processor, ASIC (application specific integrated circuit), and/or other physical hardware processor circuit) or multiple processors 810 are present in computing device 802 for performing such tasks as program execution, signal coding, data processing, input/output processing, power control, and/or other functions. In examples, processor 810 is a single-core or multi-core processor, and each processor core is single-threaded or multithreaded (to provide multiple threads of execution concurrently). Processor 810 is configured to execute program code stored in a computer readable medium, such as program code of operating system 812 and application programs 814 stored in storage 820. The program code is structured to cause processor 810 to perform operations, including the processes/methods disclosed herein. Operating system 812 controls the allocation and usage of the components of computing device 802 and provides support for one or more application programs 814 (also referred to as "applications" or "apps"). In examples, application programs 814 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 810 includes one or more general processors (e.g., CPUs) configured with or coupled to one or more hardware accelerators, such as one or more NPUs 844 and/or one or more GPUs 842.

Any component in computing device 802 can communicate with any other component according to function, although not all connections are shown for ease of illustration. For instance, as shown in FIG. 8, bus 806 is a multiple signal line communication medium (e.g., conductive traces in silicon, metal traces along a motherboard, wires, etc.) present to communicatively couple processor 810 to various other components of computing device 802, although in other embodiments, an alternative bus, further buses, and/or one or more individual signal lines is/are present to communicatively couple components. Bus 806 represents one or more of any of several types of bus structures, including a memory bus or memory controller, a peripheral bus, an accelerated graphics port, and a processor or local bus using any of a variety of bus architectures.

Storage 820 is physical storage that includes one or both of memory 856 and storage device 888, which store operating system 812, application programs 814, and application data 816 according to any distribution. Non-removable memory 822 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 822 includes main memory and is separate from or fabricated in a same integrated circuit as processor 810. As shown in FIG. 8, non-removable memory 822 stores firmware 818 that is present to provide low-level control of hardware. Examples of firmware 818 include BIOS (Basic Input/Output System, such as on personal computers) and boot firmware (e.g., on smart phones). In examples, removable memory 824 is inserted into a receptacle of or is otherwise coupled to computing device 802 and can be removed by a user from computing device 802. Removable memory 824 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 888 are present that are internal and/or external to a housing of computing device 802 and are or are not removable. Examples of storage device 888 include a hard disk drive, a SSD, a thumb drive (e.g., a USB (Universal Serial Bus) flash drive), or other physical storage device.

One or more programs are stored in storage 820. Such programs include operating system 812, one or more application programs 814, and other program modules and program data. Examples of such application programs include computer program logic (e.g., computer program code/instructions) for implementing frontend 104, first service 106, flighting service 108, flighting sessions 110, second service 112, collected data 114, flighting UI(s) 202, customer consent 204, and/or each of the components described therein, as well as any of flowcharts 300, 400, 500, 600, 700, and/or any individual steps thereof.

Storage 820 also stores data used and/or generated by operating system 812 and application programs 814 as application data 816. Examples of application data 816 include web pages, text, images, tables, sound files, video data, and other data. In examples, application data 816 is sent to and/or received from one or more network servers or other devices via one or more wired or wireless networks. Storage 820 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 802 through one or more input devices 830 and receives information from computing device 802 through one or more output devices 850. Input device(s) 830 includes one or more of touch screen 832, microphone 834, camera 836, physical keyboard 838 and/or trackball 840 and output device(s) 850 includes one or more of speaker 852 and display 854. Each of input device(s) 830 and output device(s) 850 are integral to computing device 802 (e.g., built into a housing of computing device 802) or are external to computing device 802 (e.g., communicatively coupled wired or wirelessly to computing device 802 via wired interface(s) 880 and/or wireless modem(s) 860). Further input devices 830 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 854 displays information, as well as operating as touch screen 832 by receiving user commands and/or other information (e.g., by touch, finger gestures, virtual keyboard, etc.) as a user interface. Any number of each type of input device(s) 830 and output device(s) 850 are present, including multiple microphones 834, multiple cameras 836, multiple speakers 852, and/or multiple displays 854.

In embodiments where GPU 842 is present, GPU 842 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 842 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 844 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 828. In an example, NPU 844 is configured for a data-driven parallel computing and is highly efficient at processing massive multimedia data such as videos and images and processing data for neural networks. NPU 844 is configured for efficient handling of Al-related tasks, such as speech recognition, background blurring in video calls, photo or video editing processes like object detection, etc.

In embodiments disclosed herein that implement ML models, NPU 844 can be utilized to execute such ML models, of which MLM 828 is an example. For instance, where applicable, MLM 828 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 844 is used to train MLM 828. To train MLM 828, training data is that includes input features (attributes) and their corresponding output labels/target values (e.g., for supervised learning) is collected. A training algorithm is a computational procedure that is used so that MLM 828 learns from the training data. Parameters/weights are internal settings of MLM 828 that are adjusted during training by the training algorithm to reduce a difference between predictions by MLM 828 and actual outcomes (e.g., output labels). In some examples, MLM 828 is set with initial values for the parameters/weights. A loss function measures a dissimilarity between predictions by MLM 828 and the target values, and the parameters/weights of MLM 828 are adjusted to minimize the loss function. The parameters/weights are iteratively adjusted by an optimization technique, such as gradient descent. In this manner, MLM 828 is generated through training by NPU 844 to be used to generate inferences based on received input feature sets for particular applications. MLM 828 is generated as a computer program or other type of algorithm configured to generate an output (e.g., a classification, a prediction/inference) based on received input features, and is stored in the form of a file or other data structure.

In examples, such training of MLM 828 by NPU 844 is supervised or unsupervised. According to supervised learning, input objects (e.g., a vector of predictor variables) and a desired output value (e.g., a human-labeled supervisory signal) train MLM 828. The training data is processed, building a function that maps new data on expected output values. Example algorithms usable by NPU 844 to perform supervised training of MLM 828 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 828 is an LLM, MLM 828 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 828 is trained to learn patterns from unlabeled data. For instance, in embodiments where MLM 828 implements unsupervised learning techniques, MLM 828 identifies one or more classifications or clusters to which an input belongs. During a training phase of MLM 828 according to unsupervised learning, MLM 828 tries to mimic the provided training data and uses the error in its mimicked output to correct itself (i.e., correct weights and biases). In further examples, NPU 844 perform unsupervised training of MLM 828 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 844 need not necessarily be present in all ML model embodiments. In embodiments where ML models are present, any one or more of processor 810, GPU 842, and/or NPU 844 can be present to train and/or execute MLM 828.

One or more wireless modems 860 can be coupled to antenna(s) (not shown) of computing device 802 and can support two-way communications between processor 810 and devices external to computing device 802 through network 804, as would be understood to persons skilled in the relevant art(s). Wireless modem 860 is shown generically and can include a cellular modem 866 for communicating with one or more cellular networks, such as a GSM network for data and voice communications within a single cellular network, between cellular networks, or between the mobile device and a public switched telephone network (PSTN). In examples, wireless modem 860 also or alternatively includes other radio-based modem types, such as a Bluetooth modem 864 (also referred to as a "Bluetooth device") and/or Wi-Fi modem 862 (also referred to as an "wireless adaptor"). Wi-Fi modem 862 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 864 is configured to communicate with another Bluetooth-capable device according to the Bluetooth short-range wireless technology standard(s) such as IEEE 802.15.1 and/or managed by the Bluetooth Special Interest Group (SIG).

Computing device 802 can further include power supply 882, LI receiver 884, accelerometer 886, and/or one or more wired interfaces 880. Example wired interfaces 880 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 880 of computing device 802 provide for wired connections between computing device 802 and network 804, or between computing device 802 and one or more devices/peripherals when such devices/peripherals are external to computing device 802 (e.g., a pointing device, display 854, speaker 852, camera 836, physical keyboard 838, etc.). Power supply 882 is configured to supply power to each of the components of computing device 802 and receives power from a battery internal to computing device 802, and/or from a power cord plugged into a power port of computing device 802 (e.g., a USB port, an A/C power port). LI receiver 884 is useable for location determination of computing device 802 and in examples includes a satellite navigation receiver such as a Global Positioning System (GPS) receiver and/or includes other type of location determiner configured to determine location of computing device 802 based on received information (e.g., using cell tower triangulation, etc.). Accelerometer 886, when present, is configured to determine an orientation of computing device 802.

Note that the illustrated components of computing device 802 are not required or all-inclusive, and fewer or greater numbers of components can be present as would be recognized by one skilled in the art. In examples, computing device 802 includes one or more of a gyroscope, barometer, proximity sensor, ambient light sensor, digital compass, etc. In an example, processor 810 and memory 856 are co-located in a same semiconductor device package, such as being included together in an integrated circuit chip, FPGA, or system-on-chip (SOC), optionally along with further components of computing device 802.

In embodiments, computing device 802 is configured to implement any of the above-described features of flowcharts herein. Computer program logic for performing any of the operations, steps, and/or functions described herein is stored in storage 820 and executed by processor 810.

In some embodiments, server infrastructure 870 is present in computing environment 800 and is communicatively coupled with computing device 802 via network 804. Server infrastructure 870, when present, is a network-accessible server set (e.g., a cloud-based environment or platform). As shown in FIG. 8, server infrastructure 870 includes clusters 872. Each of clusters 872 comprises a group of one or more compute nodes and/or a group of one or more storage nodes. For example, as shown in FIG. 8, cluster 872 includes nodes 874. Each of nodes 874 are accessible via network 804 (e.g., in a "cloud-based" embodiment) to build, deploy, and manage applications and services. In examples, any of nodes 874 is a storage node that comprises a plurality of physical storage disks, SSDs, and/or other physical storage devices that are accessible via network 804 and are configured to store data associated with the applications and services managed by nodes 874.

Each of nodes 874, as a compute node, comprises one or more server computers, server systems, and/or computing devices. For instance, a node 874 in accordance with an embodiment includes one or more of the components of computing device 802 disclosed herein. Each of nodes 874 is configured to execute one or more software applications (or "applications") and/or services and/or manage hardware resources (e.g., processors, memory, etc.), which are utilized by users (e.g., customers) of the network-accessible server set. In examples, as shown in FIG. 8, nodes 874 includes a node 846 that includes storage 848 and/or one or more of a processor 858 (e.g., similar to processor 810, GPU 842, and/or NPU 844 of computing device 802). Storage 848 stores application programs 876 and application data 878. Processor(s) 858 operate application programs 876 which access and/or generate related application data 878. In an implementation, nodes such as node 846 of nodes 874 operate or comprise one or more virtual machines, with each virtual machine emulating a system architecture (e.g., an operating system), in an isolated manner, upon which applications such as application programs 876 are executed.

In embodiments, one or more of clusters 872 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 872 are included in a datacenter in a distributed collection of datacenters. In embodiments, exemplary computing environment 800 comprises part of a cloud-based platform.

In an embodiment, computing device 802 accesses application programs 876 for execution in any manner, such as by a client application and/or a browser at computing device 802.

In an example, for purposes of network (e.g., cloud) backup and data security, computing device 802 additionally and/or alternatively synchronizes copies of application programs 814 and/or application data 816 to be stored at network-based server infrastructure 870 as application programs 876 and/or application data 878. In examples, operating system 812 and/or application programs 814 include a file hosting service client configured to synchronize applications and/or data stored in storage 820 at network-based server infrastructure 870.

In some embodiments, on-premises servers 892 are present in computing environment 800 and are communicatively coupled with computing device 802 via network 804. On-premises servers 892, when present, are hosted within an organization's infrastructure and, in many cases, physically onsite of a facility of that organization. On-premises servers 892 are controlled, administered, and maintained by IT (Information Technology) personnel of the organization or an IT partner to the organization. Application data 898 can be shared by on-premises servers 892 between computing devices of the organization, including computing device 802 (when part of an organization) through a local network of the organization, and/or through further networks accessible to the organization (including the Internet). Furthermore, in examples, on-premises servers 892 serve applications such as application programs 896 to the computing devices of the organization, including computing device 802. Accordingly, in examples, on-premises servers 892 include storage 894 (which includes one or more physical storage devices such as storage disks and/or SSDs) for storage of application programs 896 and application data 898 and include a processor 890 (e.g., similar to processor 810, GPU 842, and/or NPU 844 of computing device 802) for execution of application programs 896. In some embodiments, multiple processors 890 are present for execution of application programs 896 and/or for other purposes. In further examples, computing device 802 is configured to synchronize copies of application programs 814 and/or application data 816 for backup storage at on-premises servers 892 as application programs 896 and/or application data 898.

Embodiments described herein may be implemented in one or more of computing device 802, network-based server infrastructure 870, and on-premises servers 892. For example, in some embodiments, computing device 802 is used to implement systems, clients, or devices, or components/subcomponents thereof, disclosed elsewhere herein. In other embodiments, a combination of computing device 802, network-based server infrastructure 870, and/or on-premises servers 892 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 820. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 814) are stored in storage 820. Such computer programs can also be received via wired interface(s) 860 and/or wireless modem(s) 860 over network 804. Such computer programs, when executed or loaded by an application, enable computing device 802 to implement features of embodiments discussed herein. Accordingly, such computer programs represent controllers of the computing device 802.

Embodiments are also directed to computer program products comprising computer code or instructions stored on any computer-readable medium or computer-readable storage medium. Such computer program products include the physical storage of storage 820 as well as further physical storage types.

### IV. Additional Example Embodiments

In embodiments, a system comprising: a processor; and a memory comprising program code executable to cause the processor to: receive a customer job request for a customer job associated with a customer; create a copy of the customer job request as a shadow job request for a shadow job; provide the customer job request to a first service having a first configuration to enable the first service to execute the customer job based on first data of the customer to generate first results; provide the shadow job request to a flighting service; determine that the shadow job request satisfies flighting criteria; provide the shadow job to a second service having a second configuration to enable the second service to execute the shadow job based on the first data of the customer to generate second results; and collect execution data resulting from execution of at least one of the customer job or the shadow job.

In embodiments, the program code is executed to further cause the processor to: validate the second configuration based on the execution data, wherein the execution data comprises at least one of: the first results; the second results; latency data; or resource consumption data.

In embodiments, to determine that the shadow job request satisfies the flighting criteria, the program code is executed to cause the processor to perform at least one of: determine that a normalized job identifier of the shadow job request satisfies a job identifier criterion of the first flighting session; determine that a timestamp of the shadow job request satisfies a temporal criterion of the first flighting session; determine that a tier identifier of the shadow job request satisfies a tier criterion of the first flighting session; determine that a job token associated with the customer job satisfies a job token criterion of the first flighting session; or determine that an account identifier associated with the customer satisfies an account criterion of the first flighting session.

In embodiments, to provide the shadow job to the second service, the program code is executed to cause the processor to: determine a first flighting scope associated the first flighting session; configure the shadow job with parameters of the first flighting session to cause the second service to collect execution data based on the first flighting scope; and provide the configured shadow job to the second service.

In embodiments, the program code is executed to further cause the processor to: normalize a job identifier to generate a normalized job identifier; determine that the shadow job request satisfies flighting criteria of a second flighting session based on the normalized job identifier; determine a first flighting scope associated with the first flighting session and a second flighting scope associated with the second flighting session; and determine that the second flighting session has precedence over the first flighting session based at least on a comparison of the first flighting scope and the second flighting scope.

In embodiments, the second configuration comprises at least one of: a second architecture that is different than a first architecture of the first configuration; a second runtime version that is different than a first runtime version of the first configuration; or a second platform version that is different than a first platform version of the first configuration.

In embodiments, the program code is executed to further cause the processor to: determine that the customer has consented to flighting of the customer job request.

In embodiments, a method comprises: receiving a customer job request for a customer job associated with a customer; creating a copy of the customer job request as a shadow job request for a shadow job; providing the customer job request to a first service having a first configuration to enable the first service to execute the customer job based on first data of the customer to generate first results; providing the shadow job request to a flighting service; determining that the shadow job request satisfies flighting criteria; providing the shadow job to a second service having a second configuration to enable the second service to execute the shadow job based on the first data of the customer to generate second results; and collecting execution data resulting from execution of at least one of the customer job or the shadow job.

In embodiments, the method further comprises: validating the second configuration based on the execution data, wherein the execution data comprises at least one of: the first results; the second results; latency data; or resource consumption data.

In embodiments, determining that the shadow job request satisfies the flighting criteria comprises at least one of: determining that a normalized job identifier of the shadow job request satisfies a job identifier criterion of the first flighting session; determining that a timestamp of the shadow job request satisfies a temporal criterion of the first flighting session; determining that a tier identifier of the shadow job request satisfies a tier criterion of the first flighting session; determining that a job token associated with the customer job satisfies a job token criterion of the first flighting session; or determining that an account identifier associated with the customer satisfies an account criterion of the first flighting session.

In embodiments, providing the shadow job to the second service comprises: determining a first flighting scope associated the first flighting session; configuring the shadow job with parameters of the first flighting session to cause the second service to collect execution data based on the first flighting scope; and providing the configured shadow job to the second service.

In embodiments, the method further comprises: normalizing a job identifier to generate a normalized job identifier; determining that the shadow job request satisfies flighting criteria of a second flighting session based on the normalized job identifier; determining a first flighting scope associated with the first flighting session and a second flighting scope associated with the second flighting session; and determining that the second flighting session has precedence over the first flighting session based at least on a comparison of the first flighting scope and the second flighting scope.

In embodiments, the second configuration comprises at least one of: a second architecture that is different than a first architecture of the first configuration; a second runtime version that is different than a first runtime version of the first configuration; or a second platform version that is different than a first platform version of the first configuration.

In embodiments, the method further comprises: determining that the customer has consented to flighting of the customer job request.

In embodiments, a computer-readable storage medium comprising executable instructions that are executed to cause the processor to: receive a customer job request for a customer job associated with a customer; create a copy of the customer job request as a shadow job request for a shadow job; provide the customer job request to a first service having a first configuration to enable the first service to execute the customer job based on first data of the customer to generate first results; provide the shadow job request to a flighting service; determine that the shadow job request satisfies flighting criteria; provide the shadow job to a second service having a second configuration to enable the second service to execute the shadow job based on the first data of the customer to generate second results; and collect execution data resulting from execution of at least one of the customer job or the shadow job.

In embodiments, the executable instructions are executed to further cause the processor to: validate the second configuration based on the execution data, wherein the execution data comprises at least one of: the first results; the second results; latency data; or resource consumption data.

In embodiments, to determine that the shadow job request satisfies the flighting criteria, the executable instructions are executed to cause the processor to perform at least one of: determine that a normalized job identifier of the shadow job request satisfies a job identifier criterion of the first flighting session; determine that a timestamp of the shadow job request satisfies a temporal criterion of the first flighting session; determine that a tier identifier of the shadow job request satisfies a tier criterion of the first flighting session; determine that a job token associated with the customer job satisfies a job token criterion of the first flighting session; or determine that an account identifier associated with the customer satisfies an account criterion of the first flighting session.

In embodiments, to provide the shadow job to the second service, the executable instructions are executed to cause the processor to: determine a first flighting scope associated the first flighting session; configure the shadow job with parameters of the first flighting session to cause the second service to collect execution data based on the first flighting scope; and provide the configured shadow job to the second service.

In embodiments, the executable instructions are executed to further cause the processor to: normalize a job identifier to generate a normalized job identifier; determine that the shadow job request satisfies flighting criteria of a second flighting session based on the normalized job identifier; determine a first flighting scope associated with the first flighting session and a second flighting scope associated with the second flighting session; and determine that the second flighting session has precedence over the first flighting session based at least on a comparison of the first flighting scope and the second flighting scope.

In embodiments, the second configuration comprises at least one of: a second architecture that is different than a first architecture of the first configuration; a second runtime version that is different than a first runtime version of the first configuration; or a second platform version that is different than a first platform version of the first configuration.

Systems, methods, and computer program products are disclosed for a multi-level workload flighting service. A received customer job request for a customer job is copied to create a shadow job request for a shadow job. The customer job request is provided to a first service having a first configuration, and the shadow job request is provided to a flighting service. The flighting service determines that the shadow job request satisfies a flighting criteria and provides the shadow job to a second service having a second configuration. Execution data resulting from execution of the customer job and the shadow job are collected for analysis.

### V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

While various embodiments of the present disclosure have been described above, it should be understood that they have been presented by way of example only, and not limitation. It will be understood by those skilled in the relevant art(s) that various changes in form and details may be made therein without departing from the scope of the invention as defined in the appended claims. Accordingly, the breadth and scope of the present invention should not be limited by any of the above-described exemplary embodiments, but should be defined only in accordance with the following claims and their equivalents.

## Claims

1. A system (100, 200, 800) comprising:
a processor (810, 842, 844, 858, 890); and
a memory (820, 848, 894) comprising program code (814, 876, 896) executable to cause the processor (810, 842, 844, 858, 890) to:
receive (302) a customer job request (116) for a customer job (118) associated with a customer;
create (304) a copy of the customer job request (116) as a shadow job (120) request for a shadow job (124);
provide (306) the customer job request (118) to a first service (106) having a first configuration to enable the first service (106) to execute the customer job (118) based on first data of the customer to generate first results (126);
provide (308) the shadow job request (120) to a flighting service (108);
determine (310) that the shadow job request (120) satisfies flighting criteria;
provide (312) the shadow job (124) to a second service (112) having a second configuration to enable the second service (112) to execute the shadow job (124) based on the first data of the customer to generate second results (128); and
collect (314) execution data (126, 128) resulting from execution of at least one of the customer job (118) or the shadow job (124).

2. The system of claim 1, wherein the program code is executed to further cause the processor to:
validate the second configuration based on the execution data,
wherein the execution data comprises at least one of:
the first results;
the second results;
latency data; or
resource consumption data.

3. The system of claim 1 or 2, wherein, to determine that the shadow job request satisfies the flighting criteria, the program code is executed to cause the processor to perform at least one of:
determine that a normalized job identifier of the shadow job request satisfies a job identifier criterion of the first flighting session;
determine that a timestamp of the shadow job request satisfies a temporal criterion of the first flighting session;
determine that a tier identifier of the shadow job request satisfies a tier criterion of the first flighting session;
determine that a job token associated with the customer job satisfies a job token criterion of the first flighting session; or
determine that an account identifier associated with the customer satisfies an account criterion of the first flighting session.

4. The system of claim 3, wherein, to provide the shadow job to the second service, the program code is executed to cause the processor to:
determine a first flighting scope associated the first flighting session;
configure the shadow job with parameters of the first flighting session to cause the second service to collect execution data based on the first flighting scope; and
provide the configured shadow job to the second service.

5. The system of claim 3 or 4, wherein the program code is executed to further cause the processor to:
normalize a job identifier to generate a normalized job identifier;
determine that the shadow job request satisfies flighting criteria of a second flighting session based on the normalized job identifier;
determine a first flighting scope associated with the first flighting session and a second flighting scope associated with the second flighting session; and
determine that the second flighting session has precedence over the first flighting session based at least on a comparison of the first flighting scope and the second flighting scope.

6. The system of any preceding claim, wherein the second configuration comprises at least one of:
a second architecture that is different than a first architecture of the first configuration;
a second runtime version that is different than a first runtime version of the first configuration; or
a second platform version that is different than a first platform version of the first configuration.

7. The system of any preceding claim, wherein the program code is executed to further cause the processor to:
determine that the customer has consented to flighting of the customer job request.

8. A method (300) comprising:
receiving (302) a customer job request (116) for a customer job (118) associated with a customer;
creating (304) a copy of the customer job request (116) as a shadow job (120) request for a shadow job (124);
providing (306) the customer job request (118) to a first service (106) having a first configuration to enable the first service (106) to execute the customer job (118) based on first data of the customer to generate first results (126);
providing (308) the shadow job request (120) to a flighting service (108);
determining (310) that the shadow job request (120) satisfies flighting criteria;
providing (312) the shadow job (124) to a second service (112) having a second configuration to enable the second service (112) to execute the shadow job (124) based on the first data of the customer to generate second results (128); and
collecting (314) execution data (126, 128) resulting from execution of at least one of the customer job (118) or the shadow job (124).

9. The method of claim 8, further comprising:
validating the second configuration based on the execution data,
wherein the execution data comprises at least one of:
the first results;
the second results;
latency data; or
resource consumption data.

10. The method of claim 8 or 9, wherein said determining that the shadow job request satisfies the flighting criteria comprises at least one of:
determining that a normalized job identifier of the shadow job request satisfies a job identifier criterion of the first flighting session;
determining that a timestamp of the shadow job request satisfies a temporal criterion of the first flighting session;
determining that a tier identifier of the shadow job request satisfies a tier criterion of the first flighting session;
determining that a job token associated with the customer job satisfies a job token criterion of the first flighting session; or
determining that an account identifier associated with the customer satisfies an account criterion of the first flighting session.

11. The method of claim 10, wherein said providing the shadow job to the second service comprises:
determining a first flighting scope associated the first flighting session;
configuring the shadow job with parameters of the first flighting session to cause the second service to collect execution data based on the first flighting scope; and
providing the configured shadow job to the second service.

12. The method of claim 10 or 11, further comprising:
normalizing a job identifier to generate a normalized job identifier;
determining that the shadow job request satisfies flighting criteria of a second flighting session based on the normalized job identifier;
determining a first flighting scope associated with the first flighting session and a second flighting scope associated with the second flighting session; and
determining that the second flighting session has precedence over the first flighting session based at least on a comparison of the first flighting scope and the second flighting scope.

13. The method of any one of claims 8 to 12, wherein the second configuration comprises at least one of:
a second architecture that is different than a first architecture of the first configuration;
a second runtime version that is different than a first runtime version of the first configuration; or
a second platform version that is different than a first platform version of the first configuration.

14. The method of any one of claims 8 to 13, further comprising:
determining that the customer has consented to flighting of the customer job request.

15. A computer-readable storage medium (820, 848, 894) comprising executable instructions (814, 876, 896) that are executed to cause a processor (810, 842, 844, 858, 890) to:
receive (302) a customer job request (116) for a customer job (118) associated with a customer;
create (304) a copy of the customer job request (116) as a shadow job (120) request for a shadow job (124);
provide (306) the customer job request (118) to a first service (106) having a first configuration to enable the first service (106) to execute the customer job (118) based on first data of the customer to generate first results (126);
provide (308) the shadow job request (120) to a flighting service (108);
determine (310) that the shadow job request (120) satisfies flighting criteria;
provide (312) the shadow job (124) to a second service (112) having a second configuration to enable the second service (112) to execute the shadow job (124) based on the first data of the customer to generate second results (128); and
collect (314) execution data (126, 128) resulting from execution of at least one of the customer job (118) or the shadow job (124).
